(19) **Europäisches Patentamt European Patent Office Office européen des brevets**

(11) **EP 1 331 983 B1**

(12) **EUROPEAN PATENT SPECIFICATION**

(45) Date of publication and mention
of the grant of the patent:
**09.01.2008 Bulletin 2008/02**

(51) Int Cl.:
*B01D 53/04* (2006.01)   *B01D 46/10* (2006.01)
*B60H 3/06* (2006.01)

(21) Application number: **01979762.0**

(22) Date of filing: **11.10.2001**

(86) International application number:
**PCT/US2001/031959**

(87) International publication number:
**WO 2002/030548 (18.04.2002 Gazette 2002/16)**

(54) **COMBINATION FILTER SYSTEM INCLUDING FLOW CHANNEL FILTRATION MEDIA AND AN ADSORBER PARTICLE FILTRATION MEDIUM**

KOMBINATIONSFILTERSYSTEM MIT FILTERMEDIUM IN EINEM STRÖMUNGSKANAL UND ADSORPTIONSPARTIKELFILTERMEDIUM

SYSTEME DE FILTRE COMBINE CONSTITUE DE MILIEUX DE FILTRATION COMPOSES DE CANAUX D'ECOULEMENT ET D'UN MILIEU DE FILTRATION COMPOSE DE PARTICULES ADSORBANTES

(84) Designated Contracting States:
**AT BE CH CY DE DK ES FI FR GB GR IE IT LI LU MC NL PT SE TR**

(30) Priority: **11.10.2000 EP 00203515**

(43) Date of publication of application:
**06.08.2003 Bulletin 2003/32**

(73) Proprietor: **3M Innovative Properties Company**
St. Paul, MN 55133-3427 (US)

(72) Inventors:
• **DOMINIAK, Klaus**
Saint Paul, MN 55133-3427 (US)
• **BOCHYNEK, Nicolai**
Saint Paul, MN 55133-3427 (US)
• **KOEHLER, Frank**
Saint Paul, MN 55133-3427 (US)

(74) Representative: **Aleandri-Hachgenei, Lorraine E.**
**3M Deutschland GmbH,**
**Office of Intellectual Property Counsel,**
**Carl-Schurz-Strasse 1**
**41453 Neuss (DE)**

(56) References cited:
EP-A- 0 383 236          DE-A- 4 124 762
DE-A- 4 134 222          DE-A- 19 647 768

• **PATENT ABSTRACTS OF JAPAN vol. 012, no. 491 (C-554), 21 December 1988 (1988-12-21) & JP 63 205115 A (MATSUSHITA ELECTRIC WORKS LTD), 24 August 1988 (1988-08-24)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

Field of the of Invention

The present invention relates to a combination filter system for filtering fluids, particularly gases, particularly for filtering air streaming into the passenger cabin of a vehicle.

Background of the Invention

Combination filter systems for filtering air streaming into the passenger cabin of a vehicle are known. Such filter systems typically comprise a particulate filter media with a sorbent filter media.

For example, WO 95/26802 discloses a combination filter system which comprises a pleated electret charged fiber/nonwoven filter media and an active carbon particle pad. Although, the active carbon particle pad exhibits good gas efficiency and/or gas capacity depending on the thickness and carbon content of the pad, the application of such an active carbon particle pad causes a high pressure drop. A high pressure drop is undesirable for vehicle cabin filter systems.

EP 383236 discloses an adsorber particle layer that is co-pleated with an electret charged fiber non-woven layer. Although such a combination filter has an acceptable pressure drop, the lifetime thereof is limited, i.e. the filter needs to be replaced frequently.

It is therefore desirable to further improve combination filters, in particular to increase the lifetime of such a filter without raising the pressure drop of such filter to an unacceptable level. Also, for use in motor vehicles, the filter should preferably be designed to meet safety regulations existing in the automotive industry. Further, the combination filter should preferably have the same or improved filter performance. It is furthermore preferred that the combination filter can be produced in a cost effective and easy way and can be easily and effectively installed in a motor vehicle for the purpose of filtering gaseous fluids entering the passenger cabin of such motor vehicle.

Summary of the Invention

The present invention provides a combination filter for filtering fluids comprising: a flow channel filtration media array and an adsorber particle filtration media, wherein said flow channel filtration media array has a first face and a second face and is formed by at least one structured film layer and a second layer, the structured film layer having a first face and a second face, at least one face of the structured film forming, at least in part, flow channels and having high aspect ratio structures over at least a portion of the face forming the flow channels and wherein a second film layer comprising the flow channel array second layer, or a further layer, at least in part defines fluid pathways through the flow channels of the array, wherein said film layers are electrostatically charged and define a plurality of inlets open through the first face and a plurality of outlets open through the second face of said array; and wherein said adsorber particle filtration media comprises a pleated layer of adsorber particles and wherein carbon filtration media is adjacent to a face of the flow channel filtration media array.

The combination filters according to the invention exhibit an advantageously low pressure drop. In addition the combination filters according to the invention show a relatively flat increase in pressure drop with loading over the lifetime of the filter, and hence, a corresponding long lifetime and high capacity.

Brief Description of the Drawings

Fig. 1 is a side view of a first structured film useful in forming the flow channel filtration medium array.
Fig. 2 is a side view of a second structured film useful in forming the flow channel filtration medium array.
Fig. 3 is a side view of a third structured film useful in forming the flow channel filtration medium array.
Fig. 4 is a side view of a fourth structured film useful in forming the flow channel filtration medium array.
Fig. 5 is a perspective view of a contoured film and flat cap film layer assembly.
Fig. 5A is a perspective view of a contoured film and flat cap film layer assembly with an additional functional layer.
Fig. 6 is a perspective view of a first embodiment of a flow channel filtration medium array formed of the Fig. 5 assembly.
Fig. 7 is a perspective view of a second embodiment of a flow channel filtration medium array.
Fig. 8 is a perspective view of a contoured film layer with a stabilization layer of strands.
Fig. 9 is a perspective view of a contoured film layer with a flat film cap layer forming a flow channel assembly.
Fig. 10 is a side view of a third embodiment of the flow channel filtration medium.

Fig. 11 is a perspective view of a fourth structured film useful in forming the flow channel filtration medium array.
Fig. 12 is a schematic representation of the combination filter.
Fig. 13 is a schematic and enlarged representation of a pleated adsorber particle filtration media.

Detailed Description of Preferred Embodiments of the Invention

The present invention provides a combination filtration media system for filtering fluids comprising a flow channel filtration media array and an adsorber particle filtration media.

The adsorber particle filtration media of the combination filter is pleated and is preferably held between two scrim layers. The scrim layer material can be any known reinforcement scrim, woven or nonwoven. Nonwoven scrims are generally preferred in terms of cost and degree of openness. The scrim material is also preferably polymeric. A scrim of nonwoven material will generally be treated to increase tensile , properties such as by thermoembossing, calandaring, sonic bonding or binder fibers for example. A typical scrim material would be a spunbond polypropylene nonwoven web. The adsorber particle layer may be further reinforced by a netting structure. Accordingly, in a particularly preferred embodiment, the adsorber particle filtration media will comprise of an adsorber particle layer reinforced with a netting that is held between two scrim layers.

The adsorber particle layer of the adsorber particle filtration media will generally have a thickness between 1mm and 5mm, preferably between 1.5 and 3mm. The adsorber particle filtration medium of the combination filter will generally not be electrostaticly charged. The pleated adsorber particle layer of the adsorber particle filtration media will generally have a pleat height between 5 and 30mm, preferably between 10 and 20mm and will generally have a pleat density of between 0.5 and 4 pleats per cm, preferably between 0.75 and 2.5 pleats per cm.

The adsorber particles of the adsorber particle filtration medium can be any of the known active adsorber particles capable of removing unwanted substances such as unwanted gasses or smells from a fluid stream. Adsorber particles for use in this invention include active carbon particles, synthetic polymer adsorbers, activated resins and zeolites. Generally, the particles will have a size between 0.01 and 2mm, preferably between 0.05 and 1mm. The particles may be bonded together by a binder. Preferably, the adsorber particles used in this invention are active carbon particles.

The combination filter will generally have the adsorber particle filtration medium located on the down stream side of the flow channel filtration medium, i.e. the fluid to be filtered will first pass through the flow channel filtration medium and thereafter through the adsorber particle filtration medium.

The flow channel filtration medium array of the combination filter is comprised preferably of charged contoured films arranged in a honeycomb structure to form fluid flow pathways. The flow channel filtration medium array also comprises film layers where at least some of the film layers have high aspect ratio structures such as ribs, stems, fibrils, or other discrete protuberances which extend the surface area of at least one face of the film layer.

Film layers are configured in a flow channel filtration medium array with the contours of the film layers defining a plurality of inlet openings into fluid pathways through a face of the array. The fluid pathways may be defined by a single contoured film layer having a cap film layer, or by adjacent contoured film layers. The fluid pathways further have outlet openings which allow fluid to pass into and through the pathways without necessarily passing through a filter layer having a flow resistance. The fluid pathways and openings of the flow channel filtration medium array as such are defined by one or more flow channels formed at least in part by the contoured film layers. The flow channels are created by peaks or ridges in the contoured film layer and can be of any suitable form as long as they are arranged to create fluid pathways in conjunction with an adjacent film layer through the flow channel filtration medium array. For example the flow channels can be separate discrete channels formed by repeating ridges or interconnected channels formed by peak structures. The flow channels could also be isolated channels (e.g., closed valleys surrounded by peaks or ridges) that together with a further contoured film layer define a fluid pathway (e.g. where the valleys on the adjacent contoured film layers are offset to create a continuous tortuous path through the filtration media array).

A plurality of adjacent, either separate or interconnected, flow channels (e.g., a series of flow channels aligned in a row sharing a common contoured film layer) of the flow channel filtration medium array are preferably defined by a series of peaks or ridges formed by a single contoured film layer. These adjacent flow channels define a flow channel layer. The peaks or ridges in the contoured film layers may be stabilized or separated by a planar or contoured cap layer. A cap layer is a layer which is in engagement, or contact, with the peaks or ridges on one face of the contoured film layers. The peaks or ridges on the opposite face of the contoured film layer can also be joined to or in contact with a cap layer. A cap layer may cover all or only a portion of a contoured film layer. If the cap layer is a planar film layer, the cap film layer and the associated contoured film layer define fluid pathways between adjacent peaks or ridges of the contoured film layer in contact or engagement with the film cap layer.

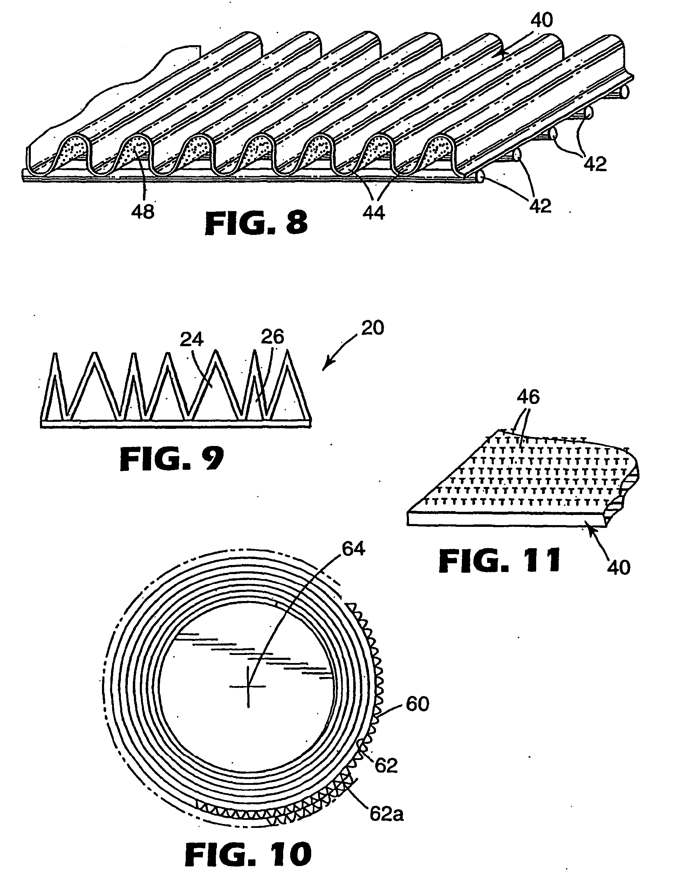

A cap layer can also be a functional layer such as a sorbent or particulate filter or a stabilization layer such as a series of stabilization filaments or a strengthened nonwoven. Fig. 8 shows a contoured film layer 40 having discrete stemlike structures 46 joined to stabilization filaments 42 at peaks 44 of the contoured film layer 40. In order to be useful as a flow channel filtration medium array, the Fig. 8 embodiment would need to be joined at a further film layer such as a cap film layer or a further contoured film layer. If a further contoured film layer were joined to the layer of filaments 42, the fluid pathways would be formed from the two flow channel layers of the two adjacent contoured film layers.

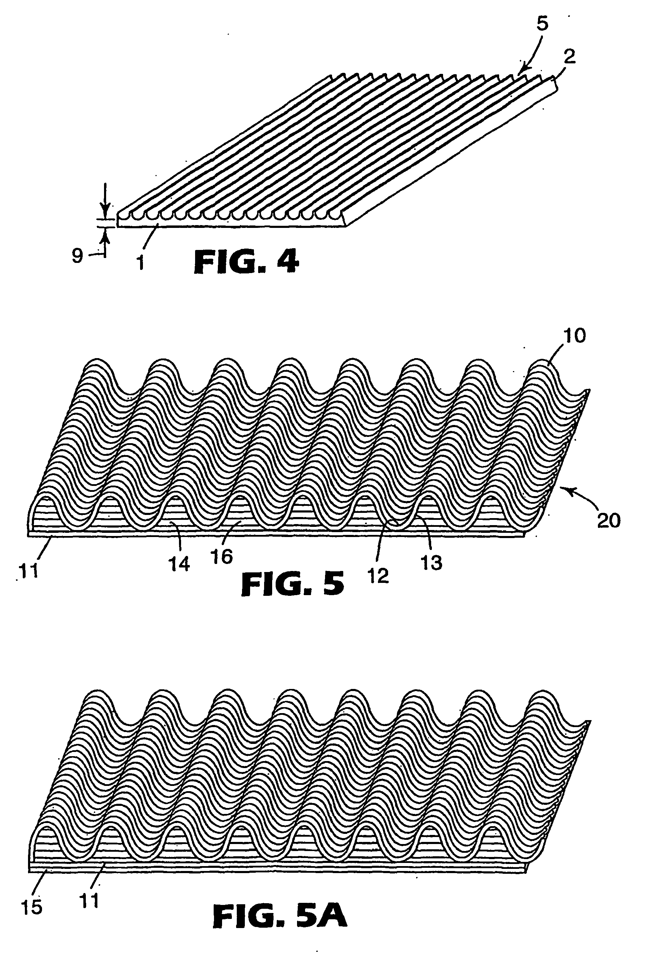

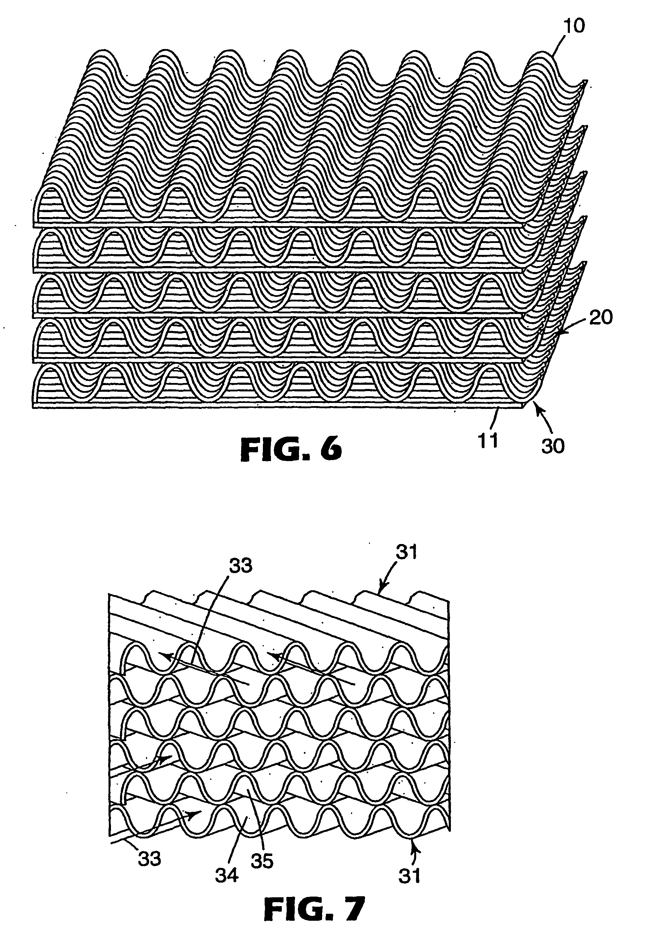

Adjacent flow channels, e.g., 14 and 16, in a flow channel layer 20, defined by a contoured film layer 10, may be all the same as shown in Fig. 5, or may be different as shown in Fig. 9. In Fig. 9, the adjacent flow channels 24 and 26 of the flow channel layer 20 are separate flow channels, which have the same height but different widths. In Fig 5 the adjacent flow channels 14 and 16 of the flow channel layer 20 are separate flow channels which have the same height and widths. For manufacturability, preferably all, or at least a majority of the peaks or ridges forming the flow channels of the contoured film layer should have substantially the same height Further, each adjacent flow channel layer 20 of the flow channel filtration medium array 30 may have the same flow channel configurations (as shown in Fig. 6), or may be different The flow channels of adjacent flow channel layers of a flow channel filtration medium array may also be aligned (e.g., as in Fig. 6), or may be offset (e.g., at angles with respect to each other as in Fig. 7) or some combination thereof. The adjacent overlying flow channel layers of a flow channel filtration medium array are generally formed from a single contoured film layer where the flow channels can be interconnected, separate, or even separate and isolated (i.e. do not extend across the entire contoured film layer). With flow channels that extend across the entire contoured film layer these channels could extend linearly or curved. Preferably, the flow channels of adjacent overlying flow channel layers are substantially parallel and aligned (Fig. 6), but they could be at diverging or converging angles. If the flow channel filtration medium array is formed of cylindrically arranged flow channel layers as shown in Fig. 10, these flow channel layers can be formed of a single contoured film layer 60 with an optional cap layer 62 configured in a corkscrew or helical alignment around a central axis 64. The contoured film layer is preferably bonded to one cap layer 62 for stability during manufacturing and in frictional contact with the other cap layers 62a.

Pairs of contoured film layers may face one another with the facing layers engaging one another at their respective peaks as shown in Fig. 7 or be separated by one or more cap layers as shown in Figs. 5, 6, and 10. When the contoured film layers 31 are in contact without an intervening film layer as shown in Fig. 7, the fluid pathways weave between adjacent intersecting flow channels, e.g., 34 and 35 of the contoured film layers 31.

The flow channels provide controlled and ordered fluid flow pathways through the flow channel filtration medium array. The amount of surface area available for filtration purposes is determined by available surface area of the flow channels and the number and length of these flow channels in flow channel filtration medium array. In other words, the features of the individual filtration media layers, such as the length of the flow channels, channel configurations, and the face surface area of the individual layers.

A single layer of flow channels provided by a contoured film layer may comprise a functional flow channel filtration medium array in accordance with the present invention, however, preferably multiple overlying flow channel layers form the functional flow channel filtration medium array. A flow channel filtration medium array formed of stacked contoured structured film layers provides an ordered or engineered and mechanically stable porous structure without the pore size variability and gross irregularities of nonwoven filter webs. Any pore size variability or irregularities are planned and controlled based on the ultimate filtration needs for which the combination filter is intended. As a result, the fluid stream is subjected to uniform treatment as it passes through the flow channels of the flow channel filtration medium array, thus enhancing its filtering efficiency. Generally, the contoured film layers forming the flow channels reinforce the flow channel filtration medium forming a structurally stable form which can be formed into a multitude of self-supporting configurations.

The flow channel filtration medium array may be conformed into a variety of shapes or laid over objects without crushing and closing the flow channels. The contoured films are electrostaticly charged while contoured in association with any attached cap layer or other layer. These layered charged contoured films are characterized by surface voltages of at least +/-1.5 KV, preferable at least +/-10 KV, measured approximately one centimeter from the film surface by an electrostatic surface voltmeter (ESVM), such as a model 341 Auto Bi-Polar ESVM, available from Trek Inc., Medina, NY. The electrostatic charge may comprise an electret, which is a piece of dielectric material that exhibits an electrical charge that persists for extended time periods. Electret chargeable materials include nonpolar polymers such as polytetrafluoroethylene (PTFE) and polypropylene. Generally, the net charge on an electret is zero or close to zero and its fields are due to charge separation and not caused by a net charge. Through the proper selection of materials and treatments, an electret can be configured that produces an external electrostatic field. Such an electret can be considered an electrostatic analog of a permanent magnet.

Several methods are commonly used to charge dielectric materials, any of which may be used to charge a contoured film layer or other layers used in the flow channel filtration medium array, including corona discharge, heating and cooling the material in the presence of a charged field, contact electrification, spraying the web with charged particles, and wetting or impinging a surface with water jets or water droplet streams. In addition, the chargeability of the surface may be enhanced by the use of blended materials or charge enhancing additives. Examples of charging methods are disclosed in the following patents: U.S. Patent No. RE 30,782 to van Turnhout et al., U.S. Patent No. RE 31,285 to van Turnhout et al., U.S. Patent No. 5,496,507 to Angadjivand et al., U.S. Patent No. 5,472,481 to Jones et al., U.S. Patent No. 4,215,682 to Kubik et al., U.S. Patent No. 5,057,710 to Nishiura et al. and U.S. Patent No. 4,592,815 to Nakao..

In addition, one or more layers could also have active charging such as by the use of a film, with a metallized surface or layer on one face that has a high voltage applied to it. This could be accomplished in the present invention by the addition of such metallized layer adjacent to a contoured layer, or the application of a metal coating on a layer. Flow channel filtration medium layers comprising such metallized layers could then be mounted in contact with an electrical voltage source resulting in electrical flow through the metallized media layers. Examples of active charging are disclosed in U.S. Patent No. 5,405,434 to Inculet

Another type of treatment available is the use of fluorochemical additives in the form of material additions or material coatings which can improve a filter layer's ability to repel oil and water, as well as enhance the ability to filter oily aerosols. Examples of such additives are found in U.S. Patent No. 5,472,481 to Jones et al., U.S. Patent No. 5,099,026 to Crater et al., and U.S. Patent No. 5,025,052 to Crater et al.

Polymers useful in forming a structured film layer used in the present invention include but are not limited to polyolefins such as polyethylene and polyethylene copolymers, polypropylene and polypropylene copolymers, polyvinylidene diflouride (PVDF), and polytetrafluoroethylene (PTFE). Other polymeric materials include acetates, cellulose ethers, polyvinyl alcohols, polysaccharides, polyesters, polyamides, poly(vinyl chloride), polyurethanes, polyureas, polycarbonates, and polystyrene. Structured film layers can be cast from curable resin materials such as acrylates or epoxies and cured through free radical pathways promoted chemically, by exposure to heat, UV, or electron beam radiation. Preferably, the structured film layers are formed of polymeric material capable of being charged namely dielectric polymers and blends such as polyolefins or polystyrenes.

Polymeric materials including polymer blends can be modified through melt blending of plasticizing active agents or antimicrobial agents. Surface modification of a filter layer can be accomplished through vapor deposition or covalent grafting of functional moieties using ionizing radiation. Methods and techniques for graft-polymerization of monomers onto polypropylene, for example, by ionizing radiation are disclosed in US Patents 4,950,549 and 5,078,925. The polymers may also contain additives that impart various properties into the polymeric structured layer.

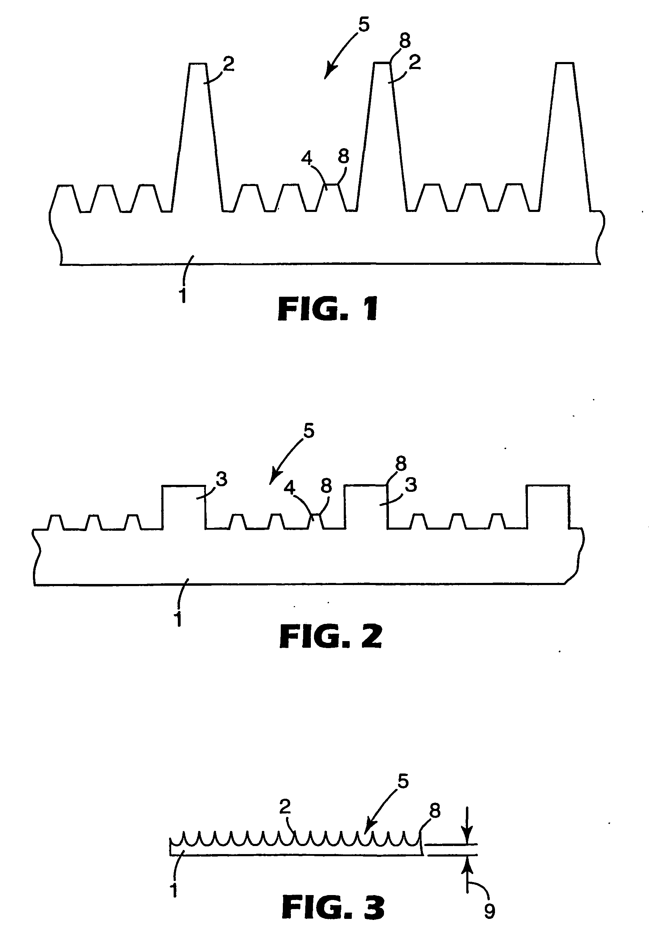

The contoured film layers and cap film layers may have structured surfaces defined on one or both faces. The high aspect ratio structures used on the contoured film and/or cap film layers of the preferred embodiments generally are structures where the ratio of the height to the smallest diameter or width is greater than 0.1, preferably greater than 0.5 theoretically up to infinity, where the structure has a height of at least about 20 microns and preferably at least 50 microns. If the height of the high aspect ratio structure is greater than 2000 microns the film can become difficult to handle and it is preferable that the height of the structures is less than 1000 microns. The height of the structures is in any case at least about 50 percent or less, of the height of the flow channels, preferably 20 percent or less. As shown in Figures 1-4 and 11 the structures on the film layers 1 can be in the shape of upstanding stems or projections, e.g., pyramids, cube corners, J-hooks, mushroom heads, or the like; continuous or intermittent ridges; e.g., rectangular 3 or v-shaped ridges 2 with intervening channels 5; or combinations thereof. Mushroom head projections 46 are shown in Fig. 11 on film backing 40. These projections can be regular, random or intermittent or be combined with other structures such as ridges. The ridge type structures can be regular, random intermittent, extend parallel to one another, or be at intersecting or nonintersecting angles and be combined with other structures between the ridges, such as nested ridges 4 or projections. Generally, the high aspect ratio structures can extend over all or just a region of a film 1. When present in a film region, the structures provide a surface area at least 50 percent higher than a corresponding planar film, preferably at least 100 percent higher, generally up to 1000 percent or higher. In a preferred embodiment, the high aspect ratio structures are continuous or intermittent ridges that extend across a substantial portion of the contoured film layer at an angle to the contours, preferably octagonal (90 degrees) to the contours of the contoured film layer as shown in Figs. 5 and 6. This reinforces the mechanical stability of the contoured film layer in the flow channel assembly (Fig. 5) and the filtration media array (Fig. 6). The ridges generally can be at an angle of from about 5 to 175 degree relative to the contours, preferably 45 to 135, generally the ridges only need to extend over a significant curved region of the contoured film.

The structured surfaces can be made by any known method of forming a structured film, such as the methods disclosed in U.S. Pat. Nos. 5,069,404 and 5,133,516, both to Marantic et al.; 5,691,846 to Benson et al.; 5,514,120 to Johnston et al.; 5,158,030 to Noreen et al.; 5,175,030 to Lu et al.; 4,668,558 to Barber, 4,775,310 to Fisher; 3,594,863 to Erb or 5,077,870 to Melbye et al.

The contoured film layers are preferably provided with a high aspect ratio structure over at least 50 percent of at least one face, preferably at least 90 percent. Cap film layers or other functional film layers can also be formed of these high aspect ratio structured films. Generally the overall flow channels should have structured surfaces forming 10 to 100 percent of its surface area, preferably 40 to 100 percent

The flow channel filtration medium array of the present invention starts with the desired materials from which the layers are to be formed. Suitable sheets of these materials having the required thickness or thicknesses are formed with the desired high aspect ratio surfaces and at least one of these film layers is contoured and this contoured film is stabilized by being joined to a further cap layer or a contoured layer, for example, forming the flow channels. The flow channel layers forming the flow channel filtration medium array, e.g., contoured film layers and cap layers, may be bonded together, mechanically contained or otherwise held into a stable flow channel filtration medium array. The contoured film and cap layers may be bonded together such as disclosed in U.S. Pat. No. 5,256,231 (extrusion bonding a film layer to a corrugated layer) or U.S. Pat. No. 5,256,231 (by adhesive or ultrasonic bonding of peaks to an underlying layer), or by melt adhering the outer edges forming the inlet and/or outlet openings. As shown in Fig. 5 a contoured structured film 10 is joined to a planar structured cap film layer 11 at the peaks 12 on one face 13 of the contoured film layer 10. One or more of these flow channel layers 20 is then stacked or otherwise layered and are oriented in a predetermined pattern or relationship, with optionally additional layers 15 (Fig. 5A), to build up a suitable volume of flow channel layers 20 in a flow channel filtration medium array 30 as shown in Fig 6. The resulting volume of flow channel layers 20 is then converted, by slicing or otherwise, into a finished flow channel filtration medium array of a desired thickness and shape. Any desired treatments, as described above, may be applied at any appropriate stage of the manufacturing process.

The flow channel filtration medium array 30 is preferably formed into its final form by slicing the array with a hot wire. The hot wire fuses the respective layers together as the final filter form is being cut. This fusing of the layers is at the outermost face or faces of the final filter. As such at least some of the adjacent layers of the flow channel filtration medium array 30 need not be joined together prior to the hot wire cutting. The hot wire cutter speed can be adjusted to cause more or less melting or fusing of the respective layers. For example, the hot wire speed could be varied to create higher or lower fused zones. Hot wires could be straight or curved to create filters of an unlimited number potential shapes including rectangular, curved or oval, for example. Also, hot wires could be used to fuse the respective layers of the flow channel filtration medium array without cutting or separating filters. For example, a hot wire could cut through the flow channel filtration medium array fusing the layers together while maintaining the pieces on either side of the hot wire together. The pieces refuse together as they cool, creating a stable flow channel filtration medium array.

Preferred embodiments of the invention use thin flexible polymer films having a thickness 9 of less than 200 microns, preferably less than 100 microns down to about 5 microns. Thicker films are possible but generally increase pressure drop without any added benefit to filtration performance or mechanical stability. The thickness of the other layers are likewise preferably less than 200 microns, most preferably less than 100 microns. The thickness of the layers forming the flow channel filtration medium array generally are such that cumulatively less than 50 percent of the cross sectional area of the flow channel filtration medium array at the inlet or outlet openings is formed by the layer materials, preferably less than 10 percent. The remaining portions of the cross sectional area form the inlet openings or outlet openings. The peaks or ridges of the contoured film generally have a minimum height of about 1mm, preferably at least 1.2 mm and most preferably at least 1.5 mm. If the peaks or ridges are greater than about 10 mm the structures become unstable and efficiency is quite low except for very long flow channel filtration medium arrays, e.g. greater than 100 cm or longer, preferably the peaks or ridges are 6 mm or less. The flow channels generally have an average cross sectional area along their length of at least about 1 mm$^2$ preferably at least 2 mm$^2$ where preferably a minimum cross sectional area is at least 0.2 mm$^2$, preferably at least 0.5 mm$^2$. The maximum cross sectional area is determined by the relative filtration efficiency required and is generally about 1 cm$^2$ or less, preferably about 0.5 cm$^2$ or less.

The shape of the flow channels is defined by the contours of the contoured film layer and the overlying cap layer or adjacent attached contoured film layer. Generally the flow channel can be any suitable shape, such as bell shaped, triangular, rectangular or irregular in shape. The flow channels of a single flow channel layer are preferably substantially parallel and continuous across the contoured film layer. However, flow channels of this type on adjacent flow channel layers can be at angles relative to each other. Also, these flow channels of specific flow channel layers can extend at angles relative to the inlet opening face or outlet opening face of the flow channel filtration medium array.

The flow channel filtration media array is preferably from 8 to 35 mm thick from the first face to the second face of the array. It has been found that when the thickness is less than 8mm, existing safety regulations for motor vehicles may not be met. When the size exceeds 35mm, the combination filter may be to bulky to fit easily in the housing provided therefor in the motor vehicle.

The flow channel filtration medium array and the adsorber particle filtration medium may be formed into the combination filter in any of the conventional ways. For example, the adsorber particle filtration medium may be glued to the flow channel filtration medium by gluing the pleat tips of the pleated adsorber particle filtration medium to the flow channel filtration medium array. Preferably however, the flow channel filtration medium array and the adsorber particle filtration medium will be held together by a pair of strips along two opposing ends of the combination filter. Such strips can be glued to the ends of the flow channel filtration medium array and the adsorber particle filtration medium thereby holding both together in the combination filter. Such strips can be made of any material such as for example plastic and they can be rigid as well as flexible or compressible. In accordance with a particular embodiment, the strips can flexible and compressible such as for example a strip of foam or non-woven. The use of such a strip will have the advantage that it could also function as a sealing against the housing in which the combination filter is to be fitted.

According to a particularly preferred embodiment, the flow channel filtration medium and adsorber particle filtration medium will be held together by providing a frame around the periphery of the combination filter. Such frame is preferably glued to the ends of the flow channel filtration medium and the adsorber particle filtration medium. The frame can be rigid and may be made of plastic or any other suitable material. Preferably, the frame is comprised of a flexible and compressible material that can function as a frame as well as a sealing. Such materials include for example foams and non-woven materials. Thanks to the rigidity and stability of the flow channel filtration medium array, the frame does not need to be rigid and even a fairly flexible material such as a foam can be used as the frame.

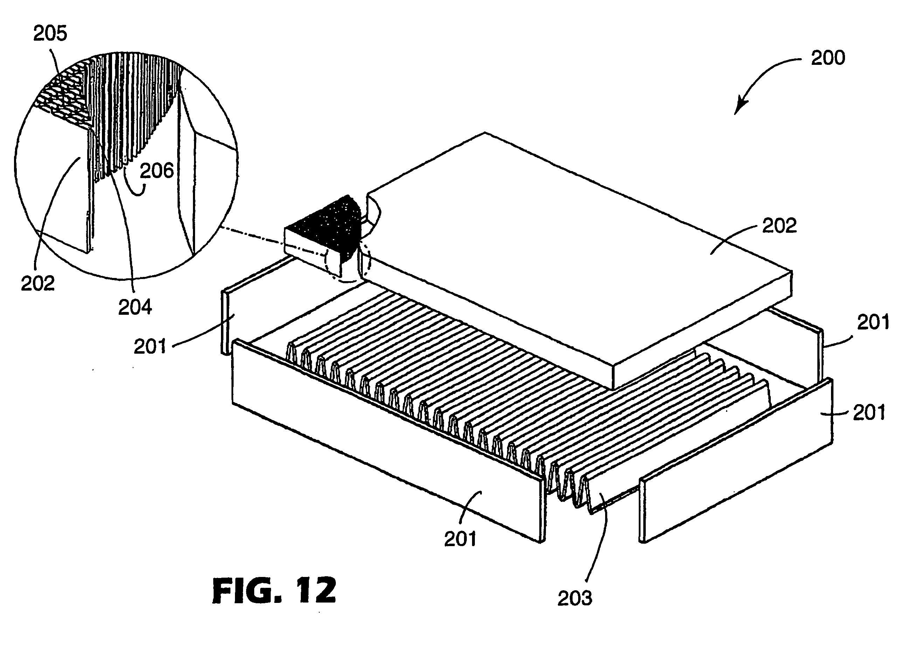

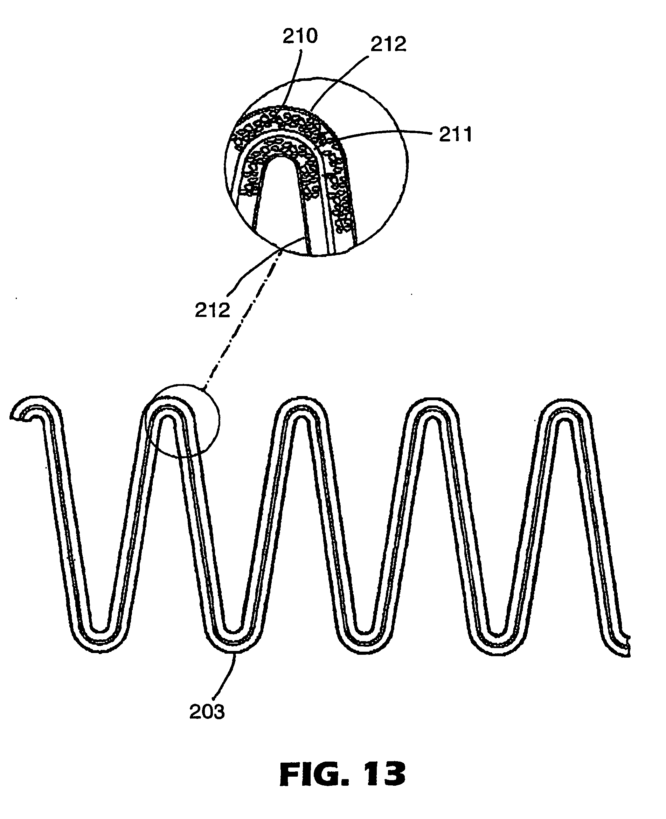

Figure 12 illustrates an embodiment of a combination filter. As can been seen from this figure, combination filter 200 includes frame portions 201 which are made of foam and which are glued to the ends of the flow channel filtration medium array 202 and the adsorber particle filtration medium 203. As can be seen from figure 13, adsorber particle filtration medium 203 is pleated and comprises adsorber particle particles 210 supported by a netting 211. The adsorber particle layer is held between two layers of scrim 212 . Referring back to figure 12, and in particular the enlargement A shown in that figure, it can be appreciated that flow channel filtration medium array is made up of a stack of contoured film layers 204 that are electrostaticly charged and that are structured on at least one of their faces. Contoured film layers 204 define flow channels that extend from one face 205 to the opposite face 206. In use, face 205 will define the inlet and face 206 will define the outlet to which the carbon filtration medium 203 is provided. Accordingly, the unfiltered fluid will enter at face 206 and move through the flow channel filtration medium array first and will then flow through the carbon filtration medium 203.

The combination filter of the present invention is particularly suitable for use in a vehicle, in particular a motor vehicle, for filtering air entering a passenger cabin of such vehicle.

The following examples are intended to further illustrate the invention without however the intention to limit the invention thereto.

Examples

The invention will be further described by the following examples and test results.

Example 1

The flow channel filtration media array of a combination filter was produced using the following method: Polypropylene resin was formed into a structured film using standard extrusion techniques by extruding the resin onto a casting roll with a micro-grooved surface. The resulting cast film had a first smooth, major surface and a second structured major surface with longitudinally arranged continuous features from the casting roll. The features on the film consisted of evenly spaced first primary structures and interlaced secondary structures. The primary structures were spaced 150 microns apart and had a substantially rectangular cross-section that was about 75 microns tall and about 80 microns wide (a height/width ratio of about 1) at the base with a side wall draft of about 5°. Three secondary structures having substantially rectangular cross-sections that were 25 microns tall and 26 microns wide at the base (height/ width ratio of about 1) were evenly spaced between the primary structures at 26 micron intervals. The base film layer from which these features extended was 50 microns thick.

A first layer of structured film was corrugated into a contoured shape and attached at its arcuate peaks to a second structured film to form a flow channel laminate layer assembly. The method generally comprises forming the first structured film into a contoured sheet forming the film so that it has arcuate portions projecting in the same direction from spaced generally parallel anchor portions and bonding the spaced generally parallel anchor portions of the contoured film to a second structured film backing layer with the arcuate portions of the contoured film projecting from the backing layer. This method is performed by providing first and second heated corrugated members or rollers each having an axis and including a plurality of circumferencially spaced generally axially extending ridges around and defining its periphery, with the ridges having outer surfaces and defining spaces between the ridges adapted to receive portions of the ridges of the other corrugating member in mashing relationship. The first structured film is fed between the mashed ridges with the corrugating members are counter-rotated.

With the corrugating apparatus configured in this manner the structure film when passed through the intermashing teeth of the corrugating members at a roll speed of 5.3 rpm was compressed into and retained between the gear teeth of the upper corrugation member. With the first film registered in the teeth of the upper corrugation member the second structured film was laid over the periphery of the roll and was ultrasonically welded to the layer retained in the teeth of the upper corrugation member. Welding was accomplished between the first and second film at the top surface of the teeth of the corrugation member by employing the tooth surface as an anvil against which an ultrasonic horn was brought to bear. The thus formed corrugated flow channels were 1.8 mm in height with a base width of 2.5 mm.

The flow channel layer assembly was electret charged by exposure to a high voltage field in a grid charger by the method generally described in U.S. Patent 3,998,916 (van Turnhout). A filtration media array was formed from the charged flow channel layer assemblies by stacking layers on top of one another maintaining the channels in all the flow channel layers in a parallel alignment such that the flow channel walls formed a 90° angle with a plane defined by the inlet opening phase of the filter media array (90° incident angle). A filtration media array stack was converted into a stable filtration media array construction by hot-wire cutting the stack to produce filters 10 mm in depth. The amount of melting induced by the hot-wire and the degree of smearing of melted resin was carefully controlled so as not to obstruct the inlet or outlet openings of the filtration media array. In addition to producing the desired filter depth the hot-wire cutting process also stabilized the final assembly into a robust collapse resistant structure by fusing the front and rear phases of flow-channel layer assemblies together forming a stabilized filtration media array. For the combination filter system an array with the external dimensions of 255 x 190 mm was created.

The second component of the combination filter, the adsorber particle filtration media, was established in the following manner: An adsorber particle layer was used in which active carbon particles were attached to a netting structure. This netting was built from strands consisting of a polypropylene or similar material into which black pigments were incorporated so that the netting had the same color as the active carbon particles. The netting had a specific three-dimensional construction, a base structure was built from strands having a diameter of 0.2 mm that were arranged perpendicularly at a distance between the strands of about 7 mm so that a network of squares was created. Onto this primary layer a secondary layer was attached on one side of the primary structure whereby secondary strands of the same diameter were arranged so that they were inside each square of the original structure at a distance of about 1 mm so that the total structure obtained a thickness of 0.4 mm. This was continued in several additional steps, preferably 3-4 whereby in each step a narrower square was created above the original square. In all steps the additional layers were placed onto the previous layers on the same side of the basic structure. In this manner a three-dimensional structure was created. In a preferred embodiment the number of strands was larger in one direction as compared to the other perpendicular one. Onto this three-dimensional netting structure which had a total thickness of about 1.8 mm particles of active carbon were attached which had a size distribution in the range of 0.3-0.8 mm. The individual strands as well as the carbon particles were adhered to the entire structure utilizing a resin preferably of the polyurethane group. This resulted in a total layer including the netting and the active carbon particles having a thickness of about 2 mm and a basic weight of 550 $g/m^2$ including the netting and of 400 $g/m^2$ for the active carbon alone. The particles were adhered so that a relatively dense arrangement of the particles was created covering the netting structure in a manner that it was only barely visible.

Furthermore, scrim material was used which consisted of a spun-bond polypropylene non-woven web having a basic weight of 15 $g/m^2$. The adsorber particle layer with the three dimensional netting was placed between two layers of scrim material as it can be seen from figure 13. The scrim layers were attached to the adsorber particle layer by coating them with an adhesive preferably of the polyurethane group prior to the lamination of the three layers.

The adsorber particle filtration media as described above was then pleated in a well known manner so that a pleat height of 20 mm was obtained whereby the overall dimensions were 255 x 190 mm. This resulted in 30 pleats with a distance of about 1.2 pleats per cm. This provided in a total area of active carbon material of 0.22 $m^2$.

The flow channel filtration media array having a thickness of 10 mm was then placed onto the adsorber particle filtration media having a thickness of 20 mm so that a configuration of a total thickness of 30 mm was obtained. This configuration was then placed into a frame. For this frame a closed cell polyurethane foam was used having a height of 30 mm and a thickness of 6 mm. On one side of the foam a double sided adhesive tape was applied with a liner which was subsequently removed. The foam with the layer of adhesive material was then applied onto the configuration of the flow channel filtration media array and the adsorber particle filtration media so that a frame was created. The frame was built up from four different pieces for each of the four sides, however, alternatively also a single strip of foam having the length of the entire circumference could also be used. With the application of the foam and due to the rigidity of the flow channel filtration media array a stable configuration was obtained without the two filtration media being directly adhered to each other. Simultaneously this frame is also capable of taking over the sealing function of the entire combination filter.

Comparative Example

The Comparative Example was a pleated construction using a conventional electret filter layer instead of the flow channel filtration media array. A four layer laminate was created and subsequently pleated. As a particulate filter the following was used: A scrim layer similar to the ones used in Example 1 was used comprising a non-woven spun-bonded material produced in a known manner from fibers being multiply thermally bonded and randomly arranged. The basis weight of this non-woven spun-bonded material was 10 $g/m^2$. The spun-bonded web was combined with a non-woven material of the electret filter material consisting of electrostatically charged dielectric fibrillated or split fibers with the typical dimensions of 10 by 40 microns in cross-section. The basis weight of this non-woven material was about 40 $g/m^2$. As materials for this electret filter layer products distributed under the designation of 3M Filtrete™ by the Minnesota, Mining and Manufacturing Company can be used.

The two other layers were practically identical to two layers of Example 1 namely the adsorber particle layer as described above having a thickness of 2 mm onto which a scrim layer was attached in the same manner using an adhesive of the polyurethane group. The two configurations namely the electret filter layer with the additional scrim layer on one side and the adsorber particle layer with its scrim layer on the other side were then laminated together so that the electret filter layer was brought into direct contact with the adsorber particle layer without using an adhesive. Accordingly, the two scrim layers were at the two outer surfaces of the entire construction.

This configuration was then pleated in essentially the same manner as described above creating a pleat height of 28 mm and an overall dimension of 255 x 190 mm resulting in a total of 20 pleats so that the total area of the active material was 0.21 m$^2$ comparable to the total area of Example 1 which was 0.22 m$^2$. The pleated configuration was then placed into a frame preferably through an injection molding process.

With the above described sample filters the following comparative measurements were conducted.

The efficiency was measured in accordance with the test norm DIN 71 460, part 1. The measurement of the efficiency is conducted as follows: A test dust "coarse" according to DIN ISO 5011 is introduced according to § 4.4 of DIN 71 460. This dust is measured with particle counters prior and after the entry through the filter to be tested. The particle counters have the capability of determining particles of different particle sizes ranging between 0.5 and 15 microns at least. The ratio within this particle range then is the efficiency in percent. All provisions according to DIN 71 460, §1-4.4.2, were taken into account. It is particularly important that the filters to be tested are identical in size and configuration as stated above for the different examples. Furthermore, the captured dust was determined for Example 1 in comparison with the Comparative Example. Also in this case the tests were conducted following the test norm DIN 71 460 part 1. The determination was conducted as follows: All provisions of DIN 71 460, part 1, were taken into account which are relevant for the determination of the captured dust, especially §6.3. The measurement was carried out from the beginning until the pressure drop had been increased at the given rates of 25, 50, 75 and 100 Pa respectively. The filters were weighed prior and after the test. For the weighing also DIN ISO 5011 was to be applied.

The gas efficiency was determined in accordance with the test norm DIN 71 460, part 2. The filter to be tested is inserted into a test setup according to appendix A, Figure A.1. In this case the test material either N-butane, SO$_2$ or toluene is introduced into the system in gaseous form. The temperature is determined and the concentration of the test material is determined prior and after the passage through the filter. Simultaneously the pressure drop is measured. The concentration of the test material prior to the entry into the filter is C$_1$, the corresponding concentration after the passage through the filter is C$_2$. This is a function of the time, the test material is passing through the filter (C$_2$ (t)) while the concentration prior to the entry of the test material through the filter is constant with the time. The efficiency is then determined by

$$E_{(t)} = (1 - C_{2\,(t)} : C_1) \cdot 100\%$$

As the filter is typically loaded up with the test material, the efficiency goes down with the time. For practical reasons it has be proven that it is sufficient to indicate the different gas efficiencies immediately after the test has started and the filter has begun to adsorb the test material (this means the gas efficiency after 0 minutes) and the gas efficiency after 5 minutes. Furthermore the flow rate has to be taken into account and for practical reasons the numbers were taken at the two rates 225 m$^3$/h and 450m$^3$/h respectively.

These tests were conducted with a number of samples in order to ensure the reproducibility and the results can be seen from Tables 1 and 2. Table 1 gives a comparison between Example 1 and the Comparative Example. It shows that the pressure drop at the different flow rates of 225 m$^3$/h and 450m$^3$/h respectively are slightly better with Example 1 as compared to the Comparative Example. Furthermore, the fractional efficiency according to DIN 71 460, part 1 and the gas efficiency according to DIN 71 460, part 2 show that these values are slightly below the values of the Comparative Example. The values obtained for the Comparative Example and Example 1 are all within an acceptable range.

However, as can be seen from table 2, the filter according to the invention (Example 1) has a substantially improved dust collection capability. Thus, whereas at pressure drop increase of 100Pa at which point the filter has to be replaced, the comparative example had collected only 15g of dust, the invention sample could collect 40g of dust which still only raised the pressure drop by 35 Pa. Accordingly, the filter according to the invention will have a lifetime which is substantially longer than the comparative sample.

<div align="center">Table 1</div>

|  | Example 1 | Comparative Example |
|---|---|---|
| **Pressure Drop (PA)** @ 225 m$^3$/h @ 450 m$^3$/h | 58 Pa 175 Pa | 65 Pa 185 Pa |

(continued)

| Fractional Efficiency (%) | 225 m³/h | 450 m³/h | 225 m³/h | 450 m³/h |
|---|---|---|---|---|
| 0.3-0.5 μm | 70 | 58 | 76 | 70 |
| 0.5-1.0 μm | 73 | 67 | 84 | 81 |
| 1.0-2.0 μm | 79 | 77 | 94 | 93 |
| 2.0-5.0 μm | 88 | 83 | 98 | 97 |
| 5.0-10.0 μm | 91 | 84 | 99 | 99 |
| Gas Efficiency (%) | 225 m³/h | 450 m³/h | 225 m³/h | 450 m³/h |
| n-Butane: 0 min | 70 | 57 | 76 | 68 |
| n-Butane: 5 min | 31 | 13 | 30 | 10 |
| $SO_2$: 0 min | 74 | 58 | 80 | 65 |
| $SO_2$: 5 min | 35 | 20 | 35 | 20 |
| Toluene: 0 min | 75 | 68 | 83 | 75 |
| Toluene: 5 min | 70 | 60 | 76 | 63 |

Table 2

| Captured Dust g | Pressure Drop Pa | | | |
|---|---|---|---|---|
| | Example 1 | | Comparative Example | |
| | Absolute | Δ Pa | Absolute | Δ Pa |
| 0 | 58 | 0 | 65 | 0 |
| 5 | 62 | 4 | 72 | 7 |
| 10 | 65 | 7 | 87 | 22 |
| 15 | 69 | 11 | 105 | 40 |
| 20 | 73 | 15 | 138 | 73 |
| 25 | 78 | 20 | >190 | >125 |
| 30 | 83 | 25 | - | - |
| 35 | 88 | 30 | - | - |
| 40 | 93 | 35 | - | - |

**Claims**

1. A combination filter for filtering fluids comprising:

   a flow channel filtration media array and an adsorber particle filtration media,
   wherein said flow channel filtration media array has a first face and a second face and is formed by at least one structured film layer and a second layer, the structured film layer having a first face and a second face, at least one face of the structured film forming, at least in part, flow channels and having high aspect ratio structures over at least a portion of the face forming the flow channels and
   wherein a second film layer comprising the flow channel array second layer, or a further layer, at least in part defines fluid pathways through the flow channels of the array, wherein said film layers are electrostatically charged and define a plurality of inlets open through the first face and a plurality of outlets open through the second face of said array; and
   said adsorber particle filtration media comprises a pleated layer of adsorber particles and wherein carbon filtration media is adjacent to a face of the flow channel filtration media array.

2. A combination filter according to claim 1 wherein said adsorber particle filtration media is adjacent to the second face of the flow channel filtration media array.

3. A combination filter according to claim 1 wherein said adsorber particle filtration media includes adsorber particles embedded on a netting.

**4.** A combination filter according to claim 3 wherein said adsorber particle filtration media further includes two scrim layers and wherein said netting is located between said scrim layers.

**5.** A combination filter according to claim 1 wherein the pleat height of the carbon filtration medium is between 5mm and 30mm.

**6.** A combination filter according to claim 1 wherein the flow channel filtration media array has a thickness of 8 to 35 mm.

**7.** A combination filter according to claim 1 wherein said combination filter further comprises at least two strips adhered at opposing ends of said adsorber particle filtration media and said flow channel filtration medium array.

**8.** A combination filter according to claim 1 wherein said adsorber particle filtration media and said flow channel filtration medium array are surrounded by a frame at their periphery.

**9.** A combination filter according to claim 7 wherein said strips or said frame comprise a foam.

**10.** A combination filter according to claim 1 wherein said adsorber particles of said adsorber particle filtration medium comprise active carbon particles.

**11.** The method of filtering a fluid comprising causing said fluid to pass through a combination filter as defined in claim 1.

**12.** The method according to claim 11 wherein said fluid is a gaseous fluid.

**13.** The method according to claim 11 wherein said fluid is first passed through said flow channel filtration medium and then through said adsorber particle filtration media.

**14.** Vehicle comprising a passenger cabin and including a combination filter as defined in claim 1 for filtering air entering into the passenger cabin.

**Patentansprüche**

**1.** Kombinationsfilter zum Filtrieren von Fluiden umfassend:

eine Anordnung aus Strömungskanal-Filtrationsmedien und ein Filtrationsmedium mit adsorbierenden Partikeln, wobei die Anordnung aus Strömungskanal-Filtrationsmedien eine erste Fläche und eine zweite Fläche aufweist und aus mindestens einer strukturierten Filmschicht sowie einer zweiten Schicht gebildet ist, wobei die strukturierte Filmschicht eine erste Fläche und eine, zweite Fläche aufweist, wobei mindestens eine Fläche des strukturierten Films, zumindest in Teilen, Strömungskanäle bildet und in mindestens einem Abschnitt der Fläche, welche die Strömungskanäle bildet, große Aspektverhältnisstrukturen aufweist und wobei eine zweite Filmschicht, welche die zweite Schicht der Strömungskanalanordnung umfasst, oder eine weitere Schicht, zumindest in Teilen, Fluidleitungen durch die Strömungskanäle der Anordnung begrenzt, wobei die Filmschichten elektrostatisch geladen sind und mehrere Öffnungen zum Einlass durch die erste Fläche und mehrere Öffnungen zum Auslass durch die zweite Fläche der Anordnung begrenzen; und
das Filtrationsmedium mit adsorbierenden Partikeln eine gefaltete Schicht aus adsorbierenden Partikeln umfasst und wobei ein Kohlefiltrationsmedium an eine Fläche der Anordnung aus Strömungskanal-Filtrationsmedien angrenzt.

**2.** Kombinationsfilter gemäß dem Anspruch 1, wobei das Filtrationsmedium mit adsorbierenden Partikeln an die zweite Fläche der Anordnung aus Strömungskanal-Filtrationsmedien angrenzt.

**3.** Kombinationsfilter gemäß dem Anspruch 1, wobei das Filtrationsmedium mit adsorbierenden Partikeln adsorbierende Partikel aufweist, die auf einem netzartigen Geflecht eingebettet sind.

**4.** Kombinationsfilter gemäß dem Anspruch 3, wobei das Filtrationsmedium mit adsorbierenden Partikeln ferner zwei Schichten aus grobem Textilstoff aufweist, wobei das netzartige Geflecht sich zwischen den Schichten aus grobem Textilstoff befindet.

**5.** Kombinationsfilter gemäß dem Anspruch 1, wobei die Faltenhöhe des Kohlefiltrationsmediums zwischen 5 mm und 30 mm beträgt.

**6.** Kombinationsfilter gemäß dem Anspruch 1, wobei die Anordnung aus Strömungskanal-Filtrationsmedien eine Dicke von 8 bis 35 mm aufweist.

**7.** Kombinationsfilter gemäß dem Anspruch 1, wobei der Kombinationsfilter ferner mindestens zwei Streifen umfasst, die an gegenüberliegenden Enden des Filtrationsmediums mit adsorbierenden Partikeln und der Anordnung aus Strömungskanal-Filtrationsmedien befestigt sind.

**8.** Kombinationsfilter gemäß dem Anspruch 1, wobei das Filtrationsmedium mit adsorbierenden Partikeln und die Anordnung aus Strömungskanal-Filtrationsmedien in ihrem Außenbereich von einem Rahmen umgeben sind.

**9.** Kombinationsfilter gemäß dem Anspruch 7, wobei die Streifen oder der Rahmen einen Schaum umfassen.

**10.** Kombinationsfilter gemäß dem Anspruch 1, wobei die adsorbierenden Partikel des Filtrationsmediums mit adsorbierenden Partikeln Aktivkohlepartikel umfassen.

**11.** Verfahren zum Filtrieren eines Fluids, welches den Vorgang umfasst, das Fluid dazu zu bringen, einen Kombinationsfilter gemäß der Begriffsbestimmung in Anspruch 1 zu durchlaufen.

**12.** Verfahren gemäß Anspruch 11, wobei es sich bei dem Fluid um ein gasförmiges Fluid handelt.

**13.** Verfahren gemäß Anspruch 11, wobei das Fluid zuerst durch das Strömungskanal-Filtrationsmedium und dann durch das Filtrationsmedium mit adsorbierenden Partikeln geleitet wird.

**14.** Fahrzeug, welches eine Fahrgastzelle umfasst, wobei es ebenfalls einen Kombinationsfilter gemäß der Begriffsbestimmung in Anspruch 1 aufweist, welcher zum Filtrieren der Luft dient, die in die Fahrgastzelle gelangt.

**Revendications**

**1.** Filtre combinaison pour le filtrage de fluides comprenant:
un réseau de milieu de filtration à canaux d'écoulement et un milieu de filtration à particules adsorbantes,
dans lequel ledit réseau de milieu de filtration à canaux d'écoulement a une première face et une deuxième face et est formé par au moins une couche de film structuré et par une deuxième couche, la couche de film structuré ayant une première face et une deuxième face, au moins une face du film structuré formant, au moins en partie, des canaux d'écoulement et ayant des structures à rapport d'aspect élevé sur au moins une portion de la face formant les canaux d'écoulement et
dans lequel une deuxième couche de film, comprenant la deuxième couche du réseau à canaux d'écoulement ou une couche supplémentaire, définit au moins en partie les trajets à fluide à travers les canaux d'écoulement du réseau, dans lequel lesdites couches de film sont chargées par voie électrostatique et définissent une pluralité d'admissions ouvertes à travers la première face et une pluralité d'évacuations ouvertes à travers la deuxième face dudit réseau; et
ledit milieu de filtration de particules adsorbantes comprend une couche plissée de particules adsorbantes et dans lequel le milieu de filtration au carbone est adjacent à une face du réseau de milieu de filtration à canaux d'écoulement.

**2.** Filtre combinaison selon la revendication 1, dans lequel ledit milieu de filtration à particules adsorbantes est adjacent à la deuxième face du réseau de milieu de filtration à canaux d'écoulement.

**3.** Filtre combinaison selon la revendication 1, dans lequel ledit milieu de filtration à particules adsorbantes comprend des particules adsorbantes noyées sur un treillis.

**4.** Filtre combinaison selon la revendication 3, dans lequel ledit milieu de filtration à particules adsorbantes comprend en sus deux couches à mousseline et dans lequel ledit treillis est situé entre lesdites couches à mousseline.

**5.** Filtre combinaison selon la revendication 1, dans lequel la hauteur plissée du milieu de filtration au carbone est comprise entre 5 mm et 30 mm.

**6.** Filtre combinaison selon la revendication 1, dans lequel le réseau de milieu de filtration à canaux d'écoulement a une épaisseur de 8 à 35 mm.

**7.** Filtre combinaison selon la revendication 1, dans lequel ledit filtre combinaison comprend en sus au moins deux bandes qui adhèrent à des extrémités opposées dudit milieu de filtration à particules adsorbantes et dudit réseau de milieu de filtration à canaux d'écoulement.

**8.** Filtre combinaison selon la revendication 1, dans lequel ledit milieu de filtration à particules adsorbantes et ledit réseau de milieu de filtration à canaux d'écoulement sont entourés par un cadre à leur périphérie.

**9.** Filtre combinaison selon la revendication 7, dans lequel lesdites bandes ou ledit cadre comprennent une mousse.

**10.** Filtre combinaison selon la revendication 1, dans lequel lesdites particules adsorbantes dudit milieu de filtration à particules adsorbantes comprennent des particules de carbone actif.

**11.** Procédé de filtration d'un fluide comprenant le fait de faire passer ledit fluide à travers un filtre combinaison, tel que défini dans la revendication 1.

**12.** Procédé selon la revendication 11, dans lequel ledit fluide est un fluide gazeux.

**13.** Procédé selon la revendication 11, dans lequel ledit fluide passe tout d'abord à travers ledit milieu de filtration à canaux d'écoulement et ensuite à travers ledit milieu de filtration de particules adsorbantes.

**14.** Véhicule comprenant un habitacle à passagers et incluant un filtre combinaison tel que défini selon la revendication 1, en vue de la filtration de l'air entrant dans l'habitacle à passagers.

**FIG. 1**

**FIG. 2**

**FIG. 3**

FIG. 4

FIG. 5

FIG. 5A

**FIG. 6**

**FIG. 7**

**FIG. 8**

**FIG. 9**

**FIG. 11**

**FIG. 10**

**FIG. 12**

EP 1 331 983 B1

FIG. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9526802 A
- EP 383236 A
- US RE30782 E, van Turnhout
- US RE31285 E, van Turnhout
- US 5496507 A, Angadjivand
- US 5472481 A, Jones
- US 4215682 A, Kubik
- US 5057710 A, Nishiura
- US 4592815 A, Nakao
- US 5405434 A, Inculet
- US 5099026 A, Crater
- US 5025052 A, Crater
- US 4950549 A
- US 5078925 A
- US 5069404 A
- US 5133516 A
- US 5691846 A, Benson
- US 5514120 A, Johnston
- US 5158030 A, Noreen
- US 5175030 A, Lu
- US 4668558 A, Barber
- US 4775310 A, Fisher
- US 3594863 A, Erb
- US 5077870 A, Melbye
- US 5256231 A
- US 3998916 A, van Turnhout